# EUROPÄISCHE PATENTANMELDUNG

(11) **EP 0 774 381 A2**
(43) Veröffentlichungstag der Anmeldung: **21.05.1997**
(21) Anmeldenummer: 96113720.5
(22) Anmeldetag: 28.08.1996
(51) Int. Cl.: B60R 9/04

(54) **Dachreling für Fahrzeuge**

(30) Priorität: 14.11.1995 DE 19542341
(71) Anmelder: Happich Fahrzeug-Dachsysteme GmbH, D-42285 Wuppertal (DE)
(72) Erfinder: Cordes, Heiko, 58300 Wetter (DE)

(57) **Zusammenfassung**

Beschrieben wird eine Dachreling für Fahrzeuge, bestehend aus einem Relingrohr (3) und einem Stützfuß an jedem Relingrohrende. Erfindungsgemäß ist die Dachreling mit einem hohlen nach oben offenen Stützfuß-Unterteil (21), einer am Stützfuß-Unterteil (21) ausgebildeten Auflagerplatte (22), zumindest einer die Auflagerplatte (22) durchsetzenden Bohrung (23) für zumindest ein Befestigungselement (11), einem am Stützfuß-Unterteil (21) ausgebildeten, in ein Relingrohrende eingesetzten Steckzapfen (8), einem axial ausgerichteten Freiraum (12) zwischen Steckzapfen (8) und Relingrohr (3), einem im Freiraum (12) angeordneten, den Steckzapfen (8) mit dem Relingrohr (3) verspannenden Halterungselement und einer Abdeckkappe (5) als Stützfuß-Oberteil ausgebildet.

## Beschreibung

Die Erfindung bezieht sieh auf eine Dachreling für Fahrzeuge, bestehend aus einem Relingrohr und einem Stützfuß an jedem Relingrohrende.

Gegenüber den herkömmlichen die Steckverbindungen sichernden Mitteln, wie Schrauben, Nieten, Stiften oder Verkleben ist durch die DE 42 41 771 A1 eine Steckverbindung mit einem Steckzapfen bekanntgeworden, der zumindest ein konvexgeformtes Stirnende und eine zentrisch daran befestigte Scheibe als die Steckverbindung sicherndes Mittel aufweist, wobei die Scheibe, die in der Ausgangslage einen gegenüber dem Steckzapfen größeren Durchmesser besitzt, sich beim Einstecken des Steckzapfens in die Aufnahmebohrung, deren Durchmesser und der konvexen Form des Steckzapfenstirnendes anzupassen vermag und wobei die Scheibe mit mehreren radialen, nach außen freiauslaufenden Schlitzen ausgebildet ist.

Aus der DE 42 30 110 A1 ist ferner eine Dachreling bekannt, bei der eine auf den Steckzapfen eines Stützfußes aufgeschobene und verrastete Kunststofftülle mittels einer Rastnase in eine Wandöffnung des Relingrohrs radial eingreift. Die Kunststofftülle weist zudem einen Innenringwulst zum Einrasten in eine Ringnut des Steckzapfens auf.

Ferner sind aus dem Stand der Technik (vgl. US 52 55 993 und US 44 49 656) Steckverbindungen bekannt, bei denen ein Rastnocken durch ein Federmittel belastet oder als integraler Bestandteil des Federmittels ausgebildet ist.

Der Erfindung liegt ausgehend von einer Dachreling der eingangs genannt Art die Aufgabe zugrunde, eine weitergehende Vereinfachung der Steckverbindung zwischen einem Relingrohr und einem Stützfuß bzw. der die Steckverbindung sichernden Mittel bei Gewährleistung einer den technischen Anforderungen vollauf genügenden Abzugssicherheit zu erzielen. Darüber hinaus wird eine Verbilligung, Vereinfachung, Montageerleichterung und eine Gewichtseinsparung der gesamten Dachreling angestrebt.

Zur Lösung dieser Aufgabe wird erfindungsgemäß eine Dachreling für Fahrzeuge, bestehend aus einem Relingrohr und einem Stützfuß an jedem Relingrohrende mit einem hohlen nach oben offenen Stützfuß-Unterteil, einer am Stützfuß-Unterteil ausgebildeten Auflagerplatte, zumindest einer die Auflagerplatte durchsetzenden Bohrung für zumindest ein Befestigungselement, einem am Stützfuß-Unterteil ausgebildeten, in ein Relingrohr eingesetzten Steckzapfen, einem axial ausgerichteten Freiraum zwischen Steckzapfen und Relingrohr, einem im Freiraum angeordneten, den Steckzapfen mit dem Relingrohr verspannenden Halterungselement und einer Abdeckkappe als Stützfuß-Oberteil vorgeschlagen.

Die Einzelelemente der erfindungsgemäßen Merkmalskombination sind durchaus geeignet, sich gegenseitig zu fördern und zu stützen. Die zweiteilige Ausbildung des Stützfußes mit dem die Tragefunktion übernehmenden Stützfuß-Unterteil und dem mehr eine Abdeck- und Zierfunktion übernehmenden, als Abdeckkappe ausgebildeten Stützfuß-Oberteil erleichtert die Herstellung und sichert eine Material- und Gewichtseinsparung. Die Auflagerplatte nebst Befestigungselement ist frei zugänglich, was die Montage vereinfacht. Gleiches gilt für den Freiraum zwischen Steckzapfen und Relingrohr und insbesondere auch für das Einbringen des den Steckzapfen mit dem Relingrohr verspannenden Halterungselements. Der Freiraum zwischen Steckzapfen und Relingrohr, der durch das Halterungselement ganz oder teilweise ausgefüllt wird, macht die Einhaltung enger Toleranzen überflüssig, was wiederum der einfachen Herstellung zugute kommt.

Gemäß einer Weiterbildung der Erfindung kann vorgesehen sein, daß der Steckzapfen zwecks zusätzlicher formschlüssiger Festlegung am Relingrohr mit einem in eine Öffnung im Relingrohr eingreifenden Rastnocken ausgebildet ist. Auf diese Weise wird eine besonders zuverlässige kraft- und formschlüssig wirkende Verbindung zwischen dem Stützfuß und dem Relingrohr gewährleistet.

Bevorzugterweise besteht das Halterungselement aus einem in den Freiraum eintreibbaren Keil. Ein Keil ist ein einfaches, kostengünstig zu fertigendes und zu montierendes Bauelement und wirkt durch Selbsthemmung.

Eine zweckmäßige Ausgestaltung der Erfindung sieht vor, daß der Keil eine in den Hohlraum des Stützfuß-Unterteils hineinragende Verlängerungszunge mit einer Druchgangsbohrung zur Verankerung eines Klipselements der Abdeckkappe aufweist. Damit erfüllt der Keil zum einen die Funktion eines kraftschlüssig wirkenden Verbindungselements für die Festlegung des Stützfuß-Unterteils am Relingrohr und zum anderen die Funktion eines Halterungselements für das als Abdeckkappe ausgebildete Stützfuß-Oberteil.

Ein Ausführungsbeispiel der Erfindung wird im folgenden anhand der Zeichnungen näher erläutert, und es zeigen:
- Fig. 1: ein Fahrzeugdach mit darauf angeordneten Dachrelings,

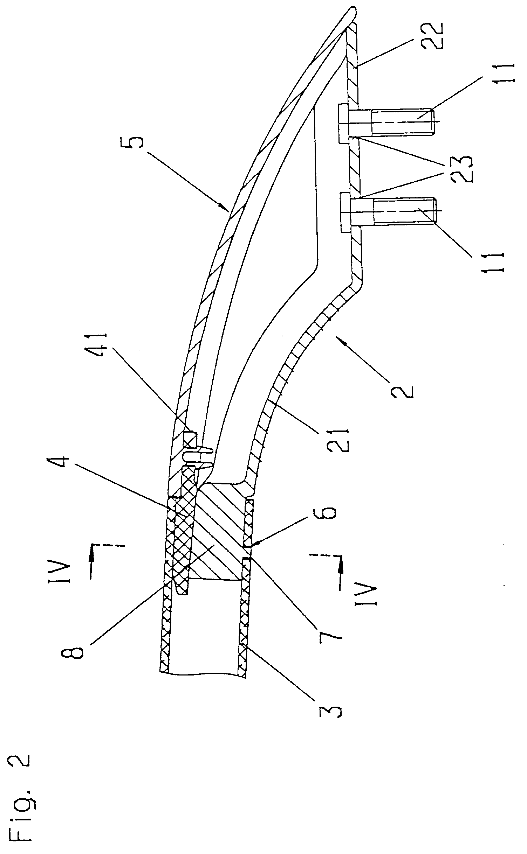

- Fig. 2: den Verbindungsbereich zwischen einem Relingrohr und einem Stützfuß im vertikalen Längsschnitt,

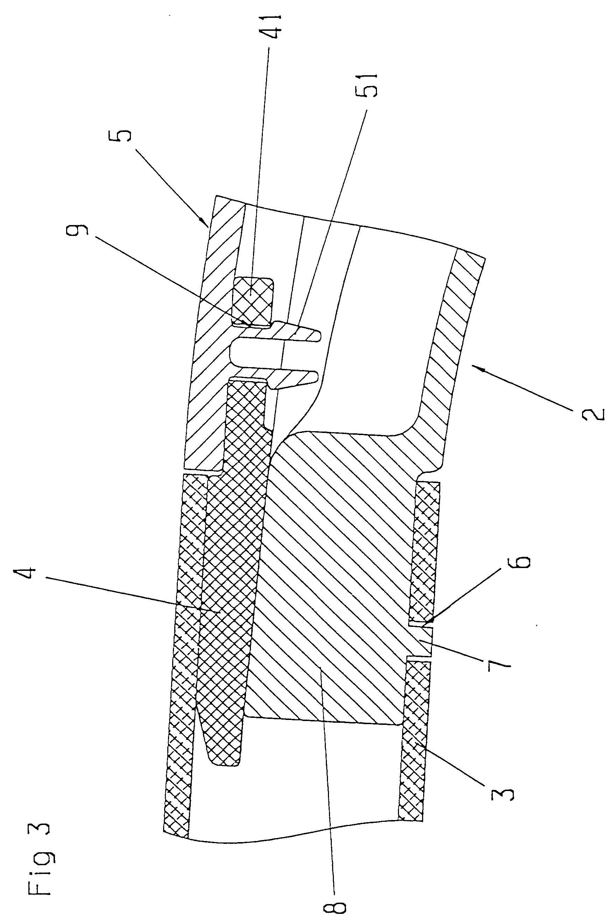

- Fig. 3: den Verbindungsbereich nach Fig. 2 im vergrößerten Maßstab und

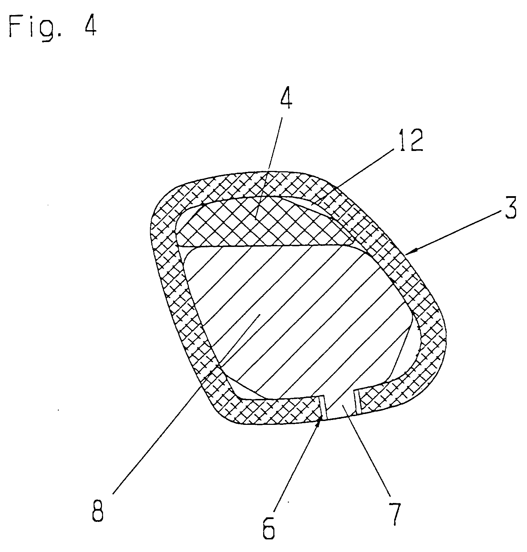

- Fig. 4: einen Schnitt IV - IV nach Fig. 2.

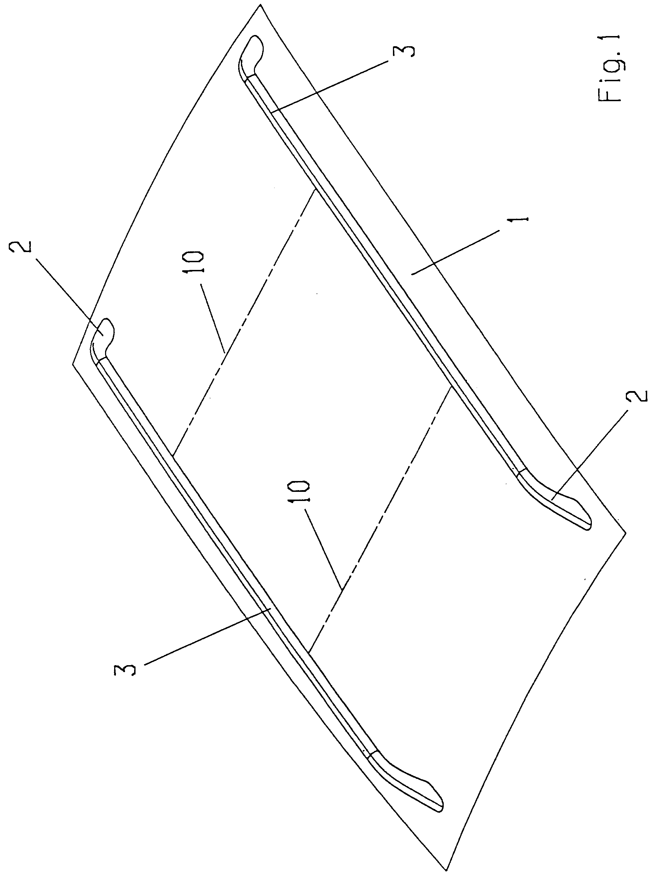

In Fig. 1 sind auf einem Fahrzeugdach 1 zwei Dachrelings, die sich entlang der seitlichen Dachränder erstrecken, befestigt. Jede Dachreling besteht aus einem Relingrohr 3 und je einem Stützfuß 2 an den Relingrohrenden. An den Relingrohren 3 sind strichpunktiert angedeutete Querträger 10 befestigbar.

Der Stützfuß 2 wird gebildet aus einem Stützfuß-Unterteil 21 und einem als Abdeckkappe 5 ausgebildeten Stützfuß-Oberteil. Das Stützfuß-Unterteil 21 ist hohl und nach oben offen ausgebildet und durch die Abdeckkappe 5 verschließbar. Das Stützfuß-Unterteil 21 weist am unteren Ende eine Auflagerplatte 22 mit Bohrungen 23 zum Durchführen von zur Dachbefestigung der Dachreling dienenden Befestigungselementen 11 auf. Am oberen Ende trägt das Stützfuß-Unterteil 21 einen Steckzapfen 8, der in einen Endbereich des Relingrohrs 3 eingreift. Die Querschnittsfläche des Steckzapfens 8 ist durch eine Abflachung kleiner als der Öffnungsquerschnitt des Relingrohrs 3 zwecks Bildung eines Freiraums 12 zur Aufnahme eines Halterungselements. Das Halterungselement besteht aus einem in den Freiraum 12 eintreibbaren Keil 4, mittels dem der Steckzapfen 8 mit dem Relingrohr 3 verspannt wird.

Eine formschlüssige Verbindung ist zusätzlich vorgesehen, die gebildet wird durch einen am Steckzapfen 8 befindlichen Rastnocken 7, der in eine Bohrung 6 des Relingrohrs 3 eingreift.

Zur Festlegung des Stützfuß-Oberteils bzw. der Abdeckkappe 5 am Stützfuß-Unterteil 21 ist der Keil 4 mit einer in den Hohlraum des Stützfuß-Unterteils 21 hineinragenden Verlängerungszunge 41 versehen mit einer Durchgangsöffnung 9. Die Durchgangsöffnung 9 wird zur Festlegung der Abdeckkappe 5 von einem daran angeformten Klipszapfen 51 durchsetzt.

## Patentansprüche

1. Dachreling für Fahrzeuge, bestehend aus einem Relingrohr (3) und einem Stützfuß (2) an jedem Relingrohrende mit
- einem hohlen nach oben offenen Stützfuß-Unterteil (21)
- einer am Stützfuß-Unterteil (21) ausgebildeten Auflagerplatte (22)
- zumindest einer die Auflagerplatte (22) durchsetzenden Bohrung (23) für zumindest ein Befestigungselement (11)
- einem am Stützfuß-Unterteil (21) ausgebildeten, in ein Relingrohr-Ende eingesetzten Steckzapfen (8)
- einem axial ausgerichteten Freiraum (12) zwischen Steckzapfen (8) und Relingrohr (3)
- einem im Freiraum (12) angeordneten, den Steckzapfen (8) mit dem Relingrohr (3) verspannenden Halterungselement und
- einer Abdeckkappe (5) als Stützfuß-Oberteil.

2. Dachreling nach Anspruch 1, dadurch gekennzeichnet, daß der Steckzapfen (8) zwecks zusätzlicher formschlüssiger Festlegung am Relingrohr (3) mit einem in eine Öffnung (6) im Relingrohr (3) eingreifenden Rastnocken ausgebildet ist.

3. Dachreling nach Anspruch 1 oder 2, dadurch gekennzeichnet, daß das Halterungselement aus einem in den Freiraum (12) eintreibbaren Keil (4) besteht.

4. Dachreling nach wenigstens einem der Ansprüche 1 - 3, dadurch gekennzeichnet, daß der Keil (4) eine in den Hohlraum des Stützfuß-Unterteils (21) hineinragende Verlängerungszunge (41) mit einer Durchgangsbohrung (9) zur Verankerung eines Klipselements (51) der Abdeckkappe (5) aufweist.
